Europäisches Patentamt

**European Patent Office**

Office européen des brevets

(11) Publication number: **0 261 083**
**B1**

(12) **EUROPEAN PATENT SPECIFICATION**

(45) Date of publication of the patent specification:
27.09.89

(51) Int. Cl.⁴: **F16B 5/07, F16B 12/00**

(21) Application number: **87830285.0**

(22) Date of filing: **24.07.87**

(54) Device for coupling and rapidly fastening a panelling plate to a household apliance door.

(30) Priority: **29.07.86 IT 2266786 U**

(43) Date of publication of application:
**23.03.88 Bulletin 88/12**

(45) Publication of the grant of the patent:
**27.09.89 Bulletin 89/39**

(84) Designated Contracting States:
**CH DE ES FR GB LI SE**

(56) References cited:
**CH-A- 268 807**
**DE-A- 2 553 330**
**DE-U- 7 605 977**
**GB-A- 1 281 770**
**US-A- 4 186 976**
**US-A- 4 391 545**

(73) Proprietor: **SMEG S.p.A., Via Circonvallazione Nord, 36, Guastalla (Reggio Emilia)(IT)**

(72) Inventor: **Prodi, Vittorio, Via Vincenzo Mantinelli, 7, Bologna(IT)**

(74) Representative: **Adorno, Silvano et al, c/o SOCIETA' ITALIANA BREVETTI S.p.A. Via Carducci, 8, I-20123 Milano(IT)**

ACTORUM AG

## Description

The present invention relates to a device for coupling and rapidly fastening a panelling plate to a door of household appliance, especially but not exclusively formed of a dishwashing machine.

Such a device is suitable to solve the problem arisen with the development of the so-called integrable household appliances, i.e. those machines which are designed to have an appearance similar to the furniture in the same room. Since a household is obviously mass-produced and therefore each model is always manufactured with substantially the same aesthetic features, that are in most cases certainly unlike those of the furniture near which the appliance is installed, it has been necessary to have recourse to a subsequent application, at least to the appliance door, of an additional panelling plate similar to or reproducing the pattern or the colour provided on the other furniture.

In order to solve the above-mentioned problem various devices for fastening a panel to a household appliance door have been studied, which however have proved to be of extremely complex use, such as to render difficult the panelling operations either when they are effected by skilled personnel, or carried out by the user himself.

The difficulties of making an efficient and easy to be used device are also increased by the fact that the above-mentioned panel should be fastened in an invisible manner, i.e. the coupling and clamping means should not be in view and the panel should appear from the outside as an integrating portion of the appliance construction.

Therefore it has been necessary to make use, for the known devices, of fastening means to be operated only from the back side of the panel while this is temporarily kept at a distance from the front surface of the door upon pivoting about a rotation axis of the door itself, then being made to return against the front face of the door by spring means previously provided.

The whole complex connection as described above, substantially formed of pivoting means, return spring means and panel fastening means, readily explains the reasons why the panelling plates for integrable household appliances are expensive and their installation requires time-consuming operations of difficult execution.

It is an object of the present invention to provide a device for applying and fastening a panel to a hinged door of a household appliance, which is capable to obviate all the inconveniences of the prior art devices.

According to one of the features of the device according to the invention, both the application and the removal of the panel result to be extremely easier and in practice require a single operation which minimizes the time necessary to application or, respectively, removal of the panel, so that it can be defined as a quick-acting clamping and loosening device.

It should also be appreciated that the panel fastening obtained by the device of the invention is particularly steady, thereby no clearances or relative motions, even restricted between panel and door, can be provided.

The features and advantages of the device according to the invention will result apparent from the following detailed description of a non-limiting embodiment, with reference to the annexed drawings, in which:

FIGURE 1 is a perspective view showing the front face of a household appliance door before the application of a panelling plate;

FIGURE 2 is a perspective view showing the panel as seen from the side of the face to be applied to the appliance door;

FIGURE 3 is an enlarged-scale perspective and partial view of one of the two coupling and clamping means, and in particular the lower portion thereof, provided on the panel and door (the other being identical to the illustrated one);

FIGURE 4 is an enlarged-scale front view of one of the means provided near the vertical side edges of the door to cooperate with associate means provided on the rear face of the panel and shown in Fig. 2;

FIGURE 5 shows the mutual position of the panel and the door with the corresponding anchoring means before application of the panel to the door, the whole as seen along the cross-section line V-V of Fig. 4;

FIGURE 6 is a view similar to Fig. 5, showing the first operational step of anchoring the panel to the door; and

FIGURE 7 is a view similar to Figs. 5 and 6, showing the panel finally clamped to the door.

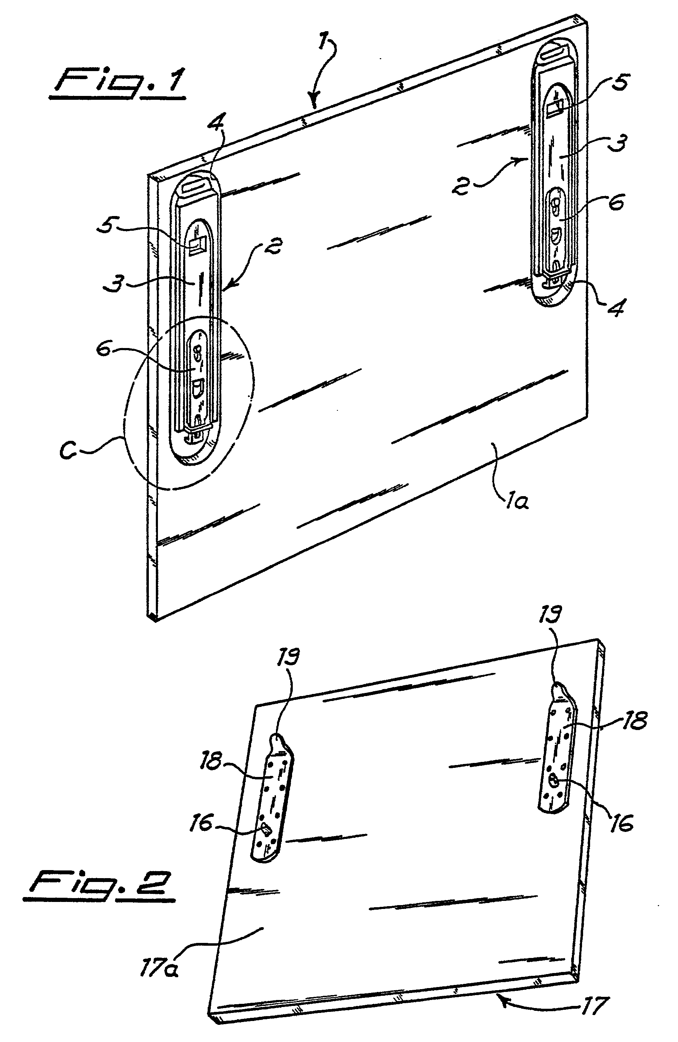

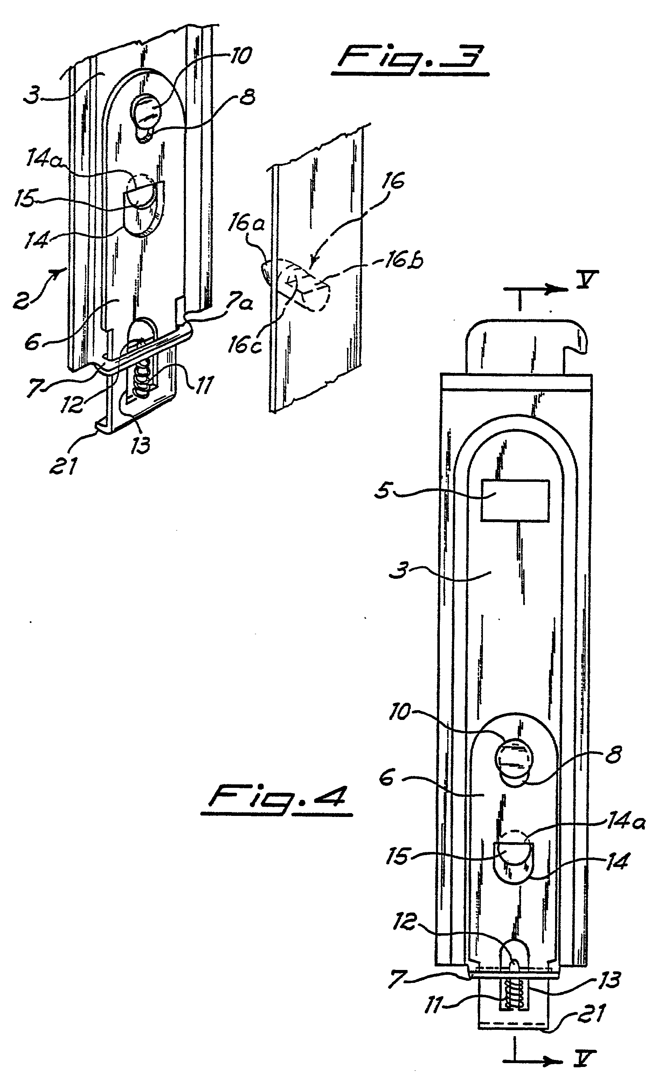

Reference will be made first to Figs. 1, 3, 4 to describe those means provided on the front face of the door which, by cooperating with associate means provided on the rear face of the panel, cause the latter to be fastened to the door.

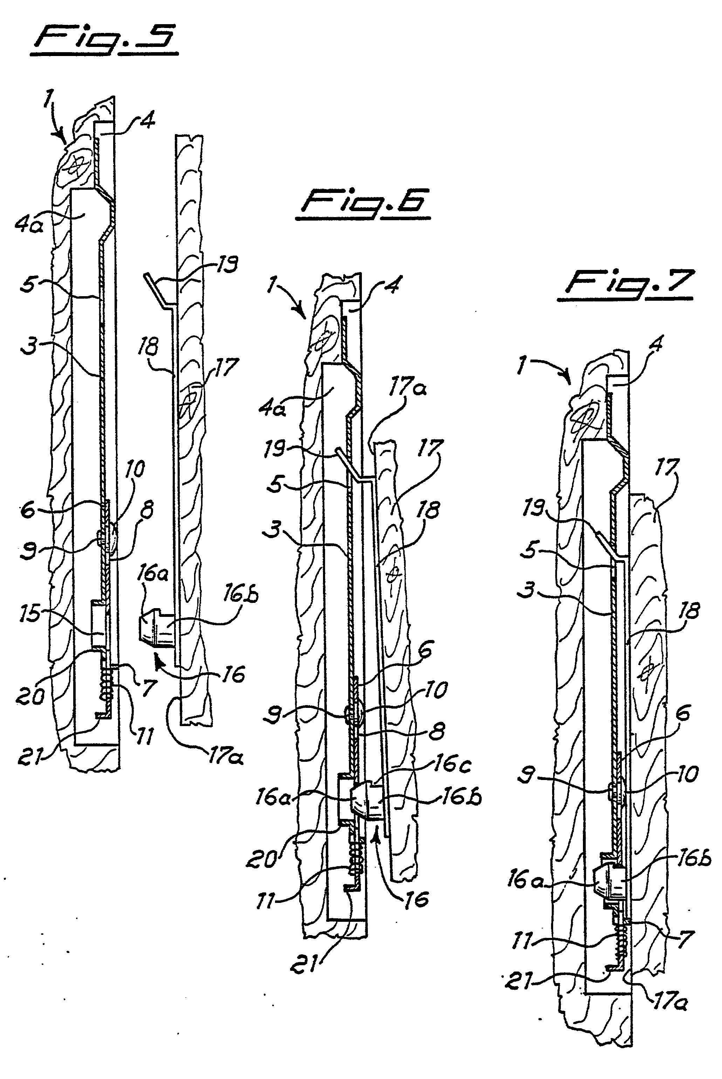

Considering now Fig. 1, numeral reference 1 designates the hinged door of a dishwashing machine, being of a substantially rectangular shape and having on the face 1a designed to be the front one, two coupling and clamping assemblies, which are both indicated 2 as being identical each other. In these circumstances Fig. 3 show a portion of only one of these assemblies and Fig. 4 shows a complete one.

Each coupling and clamping assembly 2 is formed with a long metal plate 3 having a substantially rectangular shape, the longer sides of which are essentially vertical and extend parallel to the side edges of door 1. Each plate 3 is positioned near one of said side edges and is fixed to the door 1 in whichever known way, not shown, such as by means of fastening screws, within a recess 4, 4a of the door, so that the plate 3 and the coupling and clamping means associated therewith will not protrude with respect to the front face 1a of the door 1.

Each plate 3 shows, at its upper end, an opening 5 of substantially rectangular shape which is designed to receive a hook means fixed to the rear face of the panel as will be described in the following. As in particular it appears from the sectional views of Figs. 5, 6, 7, the opening 5 of plate 3 is placed in correspondence with the zone 4a of greater depth of recess 4, precisely in order to allow for the insertion of the said hook means, fixed to the panelling plate, through opening 5 as it will appear clearer in the following.

Referring now, in addition to Fig. 1, also to Figs. 3 and 4, a slidable element 6 is mounted to the lower portion of plate 3 and is properly guided and retained thereon so as to be able to slide only upward and downward along the same for a stroke of a preset length.

As it results in particular from viewing Fig. 3 that shows at an enlarged scale the detail of the inventive device which is enclosed in the circumference C of Fig. 1, the lower edge of the plate 3 is formed with a portion or tab 7 bent at 90° to the front face of door 1 and provided with an aperture 7a within which the lower end of element 6 can only slide and thus, at the said end, is guided so as to accomplish only a rectilinear upward or downward movement.

The slide 6 is also guided at its upper end, as it is formed there with a slot 8, whose length determines the stroke allowed to the slide 6 and within which is slidable the stem of a rivet 9 fixed in whichever known manner to the plate 3 and provided with a head 10 on the outer side of the slide 6, which keeps the latter on the plate 3 plane while it moves upward or downward.

The slide 6 is kept at the lower position, illustrated on Figs. 3, 4 and 5, by means of a spring 11 which is wound around a support pin 12 integral with the slide 6 and extending longitudinally, in a direction parallel to the movement of slide 6, within an opening 13 forme     d at the lower end thereof.

The spring 11 at its lower end cooperates with the lower horizontal side of opening 13 and, at its upper end, with the peripheral edge of the bent tab 7 at the bottom of plate 3. Therefore, when the slide 6 is in its lower rest position, i.e. it is not under the action of the additional coupling and clamping means provided on the panel, it will be kept by action of the spring 11 at the completely lowered position, being however redy to allow coupling of the clamping means provided on the door 1 with the associated means on the panel, so as to allow fastening of the latter to the door 1.

To this effect the slide 6 has an aperture 14 which, in the embodiment shown, has a substantially semielliptic shape. The aperture 14 is provided to partially coincide with a hole 15 formed on the plate 3 in correspondence therewith. As a matter of fact, at the rest condition of the slide, which can be better seen in Figs. 3, 4, aperture 14 is shown to have a substantially rectilinear side 14a which at the above-mentioned position is placed transversely to the hole 15, along a line parallel to the horizontal diameter thereof. In particular the side 14a of aperture 14 defines its upper portion, whereby the aperture extends downwards from said side, and through the same both the remainder of hole 15 and a portion of plate 3 are accessible from the outside.

Such an arrangement, as shown in particular by Figs. 5, 6, 7, allows a pin 16 mounted on the opposite face of panel 17 to enter hole 15. Especially from Fig. 2 it is seen that both pins 16 are made integral with or fixed in any known manner to a metal support plate 18 which is fastened to the face 17a of panel 17 to be applied onto the door 1.

According to one feature of the device according to the invention the fitting of the pins 16 into the corresponding holes 15 of the two plates 3 occurs through a substantially snap-type movement at the end of which the slide 6, and more precisely the side 14a of aperture 14, will come into engagement with the associate pin 16 for clamping panel 17.

Each plate 18, at the end opposite to the one with pins 16, has an extension 19 which is bent with respect to the plane of face 17a of the panel 17, thus projecting therefrom. In the considered embodiment the extension 19 forms an obtuse angle with the plate 18, the reasons thereof being explained later in the course of the brief description of how panel 17 is fastened to the door 1.

With particular reference to Figs. 5, 6 and 7 the device according to the invention will be now shortly explained the operation of, but only upon having described in detail the shape of pins 16 which, by cooperating with the associate slide 6, provide for the above-mentioned snap-type coupling.

According to the said figures and also as seen from Fig. 3 the pin 16 has a configuration substantially comparable to a shape of "ogive" formed of a front portion 16a having a generally frusto-conical shape, chamfered at its end, which extends into a rear portion 16b, of substantially cylindrical shape, the cross-section area of which has been reduced along a plane parallel to a horizontal diametral plane, as also shown in Figs. 5, 6, 7, thus defining a step 16c backwards from the front portion 16a.

Panelling plate 17 is fastened to the door 1 starting from the condition of Fig. 5, where panel and door are only facing each other at the position which will allow the application of the panel to the door, as shown by Figs. 6 and 7.

As seen in Fig. 6 panel 17 is first caused to assume a slightly angled position upon a reduced counterclockwise rotation, so that extensions 19 of plates 18 can be inserted into openings 5 of plates 3. At this stage it is possible to start introducing pins 16 into the accessible portion of holes 15 on plates 3 through the apertures 14 of slides 6. Said holes 15 are then completely cleared through the upward movement of the slides 6 operated by the pins 16 themselves.

Such an operation is accomplished thanks to the particular shape of the pins 16 which, with their front portions 16a, first provide for positioning their tapered end into the accessible portion of holes 15. Thereafter it is sufficient to push the panel 17 towards the door 1 to have a gradual insertion of pins 16 into the holes 15 and at the same time a lifting movement of slides 6, due to the fact that the cross-section of portions 16a coming into engagement with the side 14a of the slide apertures 14 is of increasing area. Such a lifting occurs against the action of spring means 11 which would bias the slide to be kept at the lowered position. While pins 16 are inserted into holes 15 a corresponding gradual lifting of slides 6 is obtained, which thereby can completely clear holes 15, thus allowing the greatest cross-section area portion of the pins 16 to pass therethrough, whereupon beyond this position, the slides 6 will be urged downward by action of springs 11. The sides 14a of the apertures 14 come therefore into engagement with the step portion 16c, through a substantially snap-type movement, thus carrying out the final fastening of the panelling plate 17 to the door 1.

At the same time the extensions 19 of plates 18 have reached the position shown at Fig. 7 where they secure the panel 17 to the door 1 at its upper edge.

From the foregoing it is clear that the application and fastening of a panel 17 to a door 1 are extremely easier than by the known devices, thus rendering this operation ready to be made by the user himself without particular problems, as it is extremely simple.

Furthermore the fastening thus obtained is particularly steady and reliable, especially due to the snap-type clamping obtainable with the pins 16, but also owing to the action carried out by extensions 19 which clamp at the upper side the panelling plate 17 to the door 1.

The steadiness of the panel fastening is additionannly ensured by holes 15 having, on the rear side of plates 13, a substantially ring-shaped rim 20 extending along the whole periphery thereof at an angle of 90° to the rear wall of plate 3. Such a rim not only has the fuction of a guide for the pins 16 during their insertion into holes 15, but also forms a means for keeping the pins in position.

From Fig. 3 and Figs. 5, 6 and 7, it appears that the edge 21 of the lower end of slides 6 is bent substantially at 90° with respect to the slides themselves and to the direction of movement thereof, this edge being directed to the recess 4. The bent edge 21 is provided for rendering possible an action onto the slides 6 during disassembly of the panel 17 by engaging these edges 21 by means of any suitable tool to push the slides upward.

The removal of panel 17 is obtained in an inverse manner with respect to the application thereof, even if substantially with the same procedures.

In order to remove the panel 15 it will be sufficient to separate slightly panel 17 from the door 1 at the bottom, to introduce laterally a device or tool whatsoever and to push slightly the two slides 16 upward, by action onto the edges 21, in order to disengage the step portions 16c of pins 16, thus clearing at the same time the holes 15. Now the panel 17 can be detached from the door 1 by rotation in a clockwise direction, thus causing pins 16 to leave holes 15. During this stage, the slides 6 move downward through action of the springs 11 and their side 14a engages portion 16a of pins 16. The situation is now as represented on Fig. 6, where panel 17 can be readily removed from the door 1 by simply causing the extensions 19 to abandon openings 5 of the plates 3 to bring the panel to the position of Fig. 5.

Therefore it appears that also the disassembly of panel 17 is an extremely simple operation which may again be effected by the user himself, as it is easy and without difficulties.

## Claims

1. A device for coupling and fastening a panelling plate to a household appliance door, comprising first coupling and fastening means on the front face of the said door and second coupling and fastening means on the rear face of the said panel, suitable to cooperate with said first means, characterized by the fact that said first means on the front face (1a) of the household appliance door (1) comprises at least one pair of plates (3) fixedly mounted on the front face (1a) of the door (1), each of which having slidably applied thereon a slide (6) which can move, along a predetermined stroke, between a first position at which it partially closes a hole (15) formed on the plate (3), being kept in such a position by spring means (11), and a second position at which it completely clears the port or passage of said hole (15), the slide (6) being brought to said second position against the action of said spring means (11); the first coupling and fastening means also comprising on each plate (3) an opening (5) to receive and cooperate, similarly to the holes (15), with the second coupling and fastening means provided on the panel (17), the latter being formed of at least one pair of plates (18) fixedly mounted on the rear face (17a) of the panel (17), each having at opposite ends connecting pins (16) and extensions (19) to be respectively fitted into the holes (15) with a substantially snap-type movement and into the openings (5) of plates (3).

2. A device according to claim 1, characterized by the fact that each slide (6) is formed with an aperture (14) having at least one substantially rectilinear side (14a), which extends transversely to the associate hole (15) of plate (3), while the slide is at the said first or rest position, along a line generally parallel to the horizontal diameter of said hole (15), with the portion of slide (6) immediately above the side (14a) thereby partially closing the hole (15).

3. A device according to claim 2, characterized by the fact that the remaining portion of the hole (15) and a portion of the plate (3) adjacent thereto are accessible from the outside through said aperture (14) of the slide (6).

4. A device according to claim 1, characterized by the fact that the pins (16) are formed of a front portion (16a) tapered to the free end of the pin and a rear portion (16b) of substantially cylindrical shape, having a reduced cross-section along a plane parallel to a horizontal diametral plane, whereby a step (16c) is defined with the rear end of the front portion (16a), with which engages said side (14a) of aperture (14) of the slide (6) when the pin (16) is completely inserted into the hole (15) of the plate (13).

5. A device according to claim 4, characterized by the fact that the tapered shape of the portion (16a) of pins (16) first allows a partial insertion of their ends into the holes (15) of the plates (3) and subsequently the engagement of said portion (16a) with the side (14a) of the aperture (14) causes the slide (6) to move with a consequent complete clearing of the hole (15).

6. A device according to claim 5, characterized by the fact that the said movement of the slide (6) by means of the pin (16) occurs against the action of said spring means (11) which brings again the slide (6) into engagement with the pin (16) once the cross-section of said portion (16a) having the greatest area has entered the hole (15), in particular causing again the side (14a) of the slide aperture (14) to engage the step (16c) of the pin (16).

7. A device according to claim 1, characterized by the fact that said stroke of the slides (6) is determined by a rivet (9) fixed to the plate (3) and slidably positioned within a slot (8) of the slide (6), the length of said slot corresponding to the stroke of the latter, the rivet (9) being provided with a head (10) for keeping the slide (6) onto the plate (3).

8. A device according to claim 5, char acterized by the slide (6) being guided, at its lower end, in an aperture (7a) of a tab (7) substantially bent at an angle of 90° to the plate (3).

9. A device according to claim 1, characterized by the fact that said spring means (11) is comprised of at least one spring wound about a pin (12) which extends longitudinally within an additional opening (13) formed at the lower end of the slide (6), said spring engaging at its bottom with the lower side of the opening (13) and, at its upper end, with the peripheral edge of aperture (7a) of the tab (7).

10. A device according to claim 1, characterized by the fact that the extensions (19) of the plates (18) fixed to the panel (17) are bent outwards, whereby they protrude from the plane of the rear face (17a) of the panel (17) and can be inserted into openings (5) of the plates (3).

11. A device according to claim 10, characterized by the fact that said extensions (19) define with the plane of plates (18) an obtuse angle, whereby they provide for coupling the panel (17) to the door (1) at the upper portion thereof.

**Patentansprüche**

1. Vorrichtung zur Kupplung und Befestigung einer Verkleidungsplatte an einer Haushaltsgerätetür, aufweisend erste Kupplungs- und Befestigungsmittel auf der Vorderseite der Türe und zweite Kupplungs- und Befestigungsmittel auf der Rückseite des Paneels, die geeignet sind, mit den ersten Mitteln zusammenzuwirken, dadurch gekennzeichnet, daß die ersten Mittel auf der Vorderseite (1a) der Haushaltsgerätetür (1) zumindest ein Paar von Platten (3) umfassen, die fest auf der Vorderseite (1a) der Tür (1) montiert sind, und die jede ein darauf gleitend angebrachtes Gleitelement (6) besitzen, das entlang eines vorbestimmten Hubs zwischen einer ersten Position, bei der es teilweise ein Loch (15) schließt, das auf der Platte (3) ausgebildet ist, wobei es in einer solchen Position durch Federmittel (11) gehalten wird, und einer zweiten Position, bei der es die Öffnung oder den Durchgang des Lochs (15) gänzlich freimacht, bewegt werden kann, wobei das Gleitstück (6) gegen die Wirkung der Federmittel (11) in die zweite Position gebracht wird; die ersten Kupplungs- und Befestigungsmittel ferner auf jeder Platte (3) eine Öffnung (5) zum Aufnehmen und Zusammenwirken, ähnlich den Löchern (15) mit den zweiten Kupplungs- und Befestigungsmitteln, die auf dem Paneel (17) vorgesehen sind, aufweisen, wobei die letzteren von mindestens einem Paar von Platten (18) gebildet werden, die fest auf der Rückseite (17a) des Paneels (17) montiert sind, und von denen jede an entgegengesetzten Enden Verbindungsstifte (16) und Fortsätze (19) besitzt, die mittels einer im wesentlichen schnappschlossartigen Bewegung in die Löcher (15) bzw. in die Öffnungen (5) der Platten (3) eingepasst werden.

2. Vorrichtng nach Anspruch 1, dadurch gekennzeichnet, daß jedes Gleitstück (6) mit einer Öffnung (14) ausgebildet ist, die mindestens eine im wesentlichen gerade Seite (14a) hat, die sich, während sich das Gleitstück in der ersten oder Ruheposition befindet, quer bis zu dem zugehörigen Loch (15) der Platte (3) längs einer im großen und ganzen parallel zum horizontalen Durchmesser des Loches (15) verlaufenden Linie erstreckt, wobei der Teil des Gleitstückes (6) unmittelbar über der Seite (14a) dabei teilweise das Loch (15) schließt.

3. Vorrichtung nach Anspruch 2, dadurch gekennzeichnet, daß der restliche Teil des Loches (15) und ein dazu benachbarter Teil der Platte (3) von außen durch die Öffnung (14) des Gleitstückes (6) zugänglich sind.

4. Vorrichtung nach Anspruch 1, dadurch gekennzeichnet, daß die Stifte (16) aus einem Vorderteil (16a), das zum freien Ende des Stiftes hin verjüngt ist, und einem Rückteil (16b) von im wesentlichen zylindrischer Gestalt gebildet sind, welches einen reduzierten Querschnitt entlang einer Fläche parallel zu einer horizontalen diametralen Ebene aufweist, wodurch eine Stufe (16c) mit dem rückseitigen Ende des Vorderteils (16a) definiert wird, mit der die Seite (14a) der Öffnung (14) des Gleitstücks (6) in Eingriff gelangt, wenn der Stift (16) ganz in das Loch (15) der Platte (13) eingeführt wird.

5. Vorrichtung nach Anspruch 4, dadurch gekennzeichnet, daß die konische Form des Teils (16a) der Stifte (16) zunächst ein teilweises Einsetzen ihrer Enden in die Löcher (15) der Platten (3) erlaubt und nachfolgend das Ineinandergreifen des Teils (16a) und der Seite (14a) der Öffnung (14) das Gleitstück (6) veranlasst, sich unter einem sich daraus ergebenden völligen Freimachen des Lochs (15) zu bewegen.

6. Vorrichtung nach Anspruch 5, dadurch gekennzeichnet, daß die Bewegung des Gleitstücks (6) mit Hilfe des Stiftes (16) gegen die Wirkung der Federmittel (11) eintritt, wodurch das Gleitstück (6) wieder mit dem Stift (16) in Eingriff gebracht wird, sobald der Querschnitt des Teils (16a), der die größte Fläche besitzt, in das Loch (15) eingedrungen ist, wobei insbesondere wieder die Seite (14a) der Gleitstücköffnung (14) veranlasst wird, in die Stufe (16c) des Stiftes (16) einzugreifen.

7. Vorrichtung nach Anspruch 1, dadurch gekennzeichnet, daß der Hub der Gleitstücke (6) bestimmt wird durch eine Niete (9), die auf der Platte (3) befestigt ist und gleitend innerhalb eines Schlitzes (8) des Gleitstücks (6) positioniert ist, wobei die Länge des Schlitzes dem Hub des Gleitelementes entspricht, und wobei die Niete (9) mit einem Kopf (10) versehen ist, um das Gleitstück (6) auf der Platte (3) zu halten.

8. Vorrichtung nach Anspruch 5, dadurch gekennzeichnet, daß das Gleitstück (6) an seinem unteren Ende in einer Öffnung (7a) eines Streifens (7) geführt wird, der im wesentlichen in einem Winkel von 90° zu der Platte (3) gebogen ist.

9. Vorrichtung nach Anspruch 1, dadurch gekennzeichnet, daß die Federmittel (11) mindestens eine um einen Stift (12) herumgewickelte Feder beinhalten, der sich in Längsrichtung in einer zusätzlichen Öffnung (13) erstreckt, welche am unteren Ende des Gleitstücks (6) ausgebildet ist, wobei die Feder mit ihrem Boden in die untere Seite der Öffnung (13) und mit ihrem oberen Ende am Rand der Öffnung (7a) des Streifens (7) eingreift.

10. Vorrichtung nach Anspruch 1, dadurch gekennzeichnet, daß die Fortsätze (19) der Platten (18), die an der Platte (17) befestigt sind, nach außen gebogen sind, wobei sie aus der Ebene der Rückseite (17a) der Platte (17) herausragen und in die Öffnungen (5) der Platten (3) eingeführt werden können.

11. Vorrichtung nach Anspruch 10, dadurch gekennzeichnet, daß die Fortsätze (19) mit der Ebene der Platten (18) einen stumpfen Winkel bilden, wodurch sie für die Kupplung des Paneels (17) an die Tür (1) an ihrem oberen Teil sorgen.

**Revendications**

1. Dispositif pour l'assemblage et la fixation d'une plaque de revêtement à la porte d'un appareil ménager, comprenant des premiers moyens d'assemblage et de fixation sur la face avant de ladite porte et des seconds moyens d'assemblage et de fixation sur la face arrière dudit panneau, appropriés pour coopérer avec lesdits premiers moyens, caractérisé par le fait que lesdits premiers moyens sur la face avant (1a) de la porte (1) de l'appareil ménager comprennent au moins une paire de plaques (3) montées de façon fixe sur la face avant (1a) de la porte (1), sur chacune d'elles étant appliqué de façon coulissante un coulisseau (6) qui peut se déplacer, le long d'une course prédéterminée, entre une première position dans laquelle il ferme partiellement un trou (15) formé sur la plaque (3), étant maintenu dans cette position par un moyen à ressort (11), et une seconde position dans laquelle il dégage complètement l'orifice ou le passage dudit trou (15), le coulisseau (6) étant amené vers ladite seconde position contre l'action dudit moyen à ressort (11); les premiers moyens d'assemblage et de fixation comprenant également sur chaque plaque (3) une ouverture (5) pour recevoir et coopérer, de façon similaire aux trous (15), avec les seconds moyens d'assemblage et de fixation placés sur le panneau (17), ces derniers étant formés d'au moins une paire de plaques (18) montées de façon fixe sur la face arrière (17a) du panneau (17), chacune ayant aux extrémités opposées des goupilles d'assemblage (16) et des extensions (19) destinées à être respectivement insérées dans les trous (15) avec un mouvement sensiblement du type à encliquetage et dans les ouvertures (5) des plaques (3).

2. dispositif selon la revendication 1, caractérisé par le fait que chaque coulisseau (6) est formé avec une ouverture (14) ayant au moins un côté sensiblement rectiligne (14a), qui s'étend de façon transversale au trou associé (15) de la plaque (3), pendant que le coulisseau est dans ladite première position ou position de repos, le long d'une ligne généralement parallèle au diamètre horizontal dudit trou (15), avec la partie du coulisseau (6) immédiatement au-dessus du côté (14a) fermant ainsi partiellement le trou (15).

3. Dispositif selon la revendication 2, caractérisé par le fait que la partie restante du trou (15) et une partie de la plaque (3) qui lui est adjacente sont accessibles de l'extérieur par ladite ouverture (14) du coulisseau (6).

4. Dispositif selon la revendication 1, caractérisé par le fait que les goupilles (16) sont formées d'une partie avant (16a) conique vers l'extrémité libre de la goupille, et d'une partie arrière (16b) de forme sensiblement cylindrique, ayant une section réduite le long d'un plan parallèle à un plan diamétral horizontal, de sorte qu'un étage (16c) est défini avec l'extrémité arrière de la partie avant (16a), avec laquelle vient en contact le côté (14a) de l'ouverture (14) du coulisseau (6) lorsque la goupille (16) est complètement insérée dans le trou (15) de la plaque (13).

5. Dispositif selon la revendication 4, caractérisé par le fait que la forme conique de la partie (16a) des goupilles (16) permet d'abord une insertion partielle de leurs extrémités dans les trous (15) des plaques (3) et ensuite la venue en contact de ladite partie (16a) avec le côté (14a) de l'ouverture (14) provoque le déplacement du coulisseau (6) avec un dégagement conséquent complet du trou (15).

6. dispositif selon la revendication 5, caractérisé par le fait que ledit mouvement du coulisseau (6) au moyen de la goupille (16) se produit contre l'action dudit moyen à ressort (11) qui amène à nouveau le coulisseau (6) en contact avec la goupille (16) une fois que la section de ladite partie (16a) ayant la plus grande superficie est entrée dans le trou (15), ce qui en particulier provoque à nouveau la venue en contact du côté (14a) de l'ouverture (14) de coulisseau avec l'étage (16c) de la goupille (16).

7. Dispositif selon la revendication 1, caractérisé par le fait que ladite course des coulisseaux (6) est déterminée par un rivet (9) fixé à la plaque (3) et placé de façon coulissante à l'intérieur d'une fente (8) du coulisseau (6), la longueur de ladite fente correspondant à la course de ce dernier, le rivet (9) étant muni d'une tête (10) pour maintenir le coulisseau (6) sur la plaque (3).

8. Dispositif selon la revendication 5, caractérisé en ce que le coulisseau (6) est guidé, à son extrémité inférieure, dans une ouverture (7a) d'une patte (7) sensiblement courbée selon un angle de 90° par rapport à la plaque (3).

9. Dispositif selon la revendication 1, caractérisé par le fait que ledit moyen à ressort (11) est constitué d'au moins un ressort enroulé autour d'une pointe (12) qui s'étend longitudinalement à l'intérieur d'une ouverture supplémentaire (13) formée dans l'extrémité inférieure du coulisseau (6), ledit ressort venant en contact, dans sa partie inférieure, avec le côté inférieur de l'ouverture (13) et, dans sa partie supérieure, avec le bord périphérique de l'ouverture (7a) de la patte (7).

10. Dispositif selon la revendication 1, caractérisé par le fait que les extensions (19) des plaques (18) fixées au panneau (17) sont courbées vers l'extérieur, de sorte qu'elles dépassent depuis le plan de la face arrière (17a) du panneau (17) et peuvent être insérées dans les ouvertures (5) des plaques (3).

11. Dispositif selon la revendication 10, caractérisé par le fait que lesdites extensions (19) définissent avec le plan des plaques (18)) un angle obtus, de sorte qu'elles permettent d'assembler le panneau (17) à la porte (1) au niveau de la partie supérieure de celle-ci.

_Fig.1_

_Fig.2_

_Fig.3_

3
10
8
14a
15
14
2
6
7a
7
12
11
21
13

16
16a
16b
16c

_Fig.4_

V

5
3
10
6
8
14a
15
14
12
7
11
13
21

V

*Fig.5*

*Fig.6*

*Fig.7*